# FASCICULE DE BREVET EUROPEEN

(11) **EP 3 043 884 B1**
(45) Date de publication et mention de la délivrance du brevet: **01.07.2020**
(21) Numéro de dépôt: 14784282.7
(22) Date de dépôt: 12.09.2014
(51) Int. Cl.: B01D 53/04

(54) **PROCEDE REGENERATIF D'ELIMINATION DES COMPOSES SILOXANES DANS DU BIOGAZ**
REGENERIERUNGSVERFAHREN ZUR BESEITIGUNG VON SILOXANVERBINDUNGEN AUS BIOGAS
REGENERATIVE METHOD FOR REMOVING SILOXANE COMPOUNDS FROM BIOGAS

(30) Priorité: 13.09.2013 FR 1358865
(43) Date de publication de la demande: 20.07.2016
(73) Titulaire: Arol Energy, 73370 Le Bourget du Lac (FR)
(72) Inventeur: BOSSAN, David, F-01420 Seyssel (FR)
(74) Mandataire: Plasseraud IP
(86) Numéro de dépôt international: PCT/FR2014/052266
(87) Numéro de publication internationale: WO 2015/036711

(56) Documents cités:
- EP-A1- 0 818 617
- DE-A1- 19 828 593
- JP-A- H06 142 432
- US-A- 5 912 423
- US-A1- 2012 024 157
- US-B1- 6 364 936

## Description

### DOMAINE DE L'INVENTION

La présente invention se situe dans le contexte de la purification de biogaz. Plus spécifiquement, cette invention concerne un procédé d'élimination des composés siloxanes de biogaz.

### ARRIERE-PLAN TECHNOLOGIQUE

Le biogaz est un gaz combustible obtenu par fermentation, aussi appelée méthanisation, de déchets organiques d'origine animale ou végétale en absence d'oxygène. Il est principalement composé de méthane et de gaz carbonique. On y trouve aussi classiquement un peu d'azote, très peu d'oxygène, de la vapeur d'eau, du sulfure d'hydrogène (H₂S) et de nombreuses autres substances en très faible quantité, notamment des composés organiques volatils (COV), des hydrocarbures aromatiques polycycliques (HAP), des composés halogénés, des métaux lourd et des siloxanes. La nature et la teneur en ces substances varient notamment en fonction du procédé de méthanisation et de la nature de la matière méthanisée.

Le biogaz peut être utilisé comme carburant en remplacement du gaz naturel. Cependant, en fonction des utilisations visées, il peut être nécessaire de purifier le biogaz pour en éliminer certaines substances contaminantes. Par exemple, dans le cas d'une utilisation du biogaz comme carburant moteur, il est nécessaire d'éliminer les composés siloxanes car, oxydés à haute températures, les siloxanes forment des dépôts de silice qui peuvent endommager gravement les équipements.

La purification de biogaz est généralement menée à l'aide de filtres qui captent les composés indésirables par un phénomène d'adsorption. Lorsque la matière des filtres est saturée, les filtres usagés sont remplacés par des neufs, avec les conséquences économiques et écologiques qui en découlent. Actuellement, les solutions dites régénératives, c'est-à-dire les procédés dans lesquels les filtres usagés sont régénérés et réutilisés, sont peu nombreuses.

La demande de brevet américain US 2013/0137567 présente une méthode d'élimination de siloxanes dans du biogaz à l'aide d'un matériau adsorbant régénérable. Le matériau régénérable mis en œuvre est du charbon actif sous forme de granulés disposé à l'intérieur d'une enceinte tubulaire de section rectangulaire formée par deux électrodes et deux éléments diélectriques disposés respectivement face à face. Lorsque le charbon actif est saturé en contaminant, il peut être régénéré en faisant passer un courant électrique entre les deux électrodes du dispositif. Cette solution technique pose cependant un problème au niveau du maintien du contact électrique entre les deux électrodes : si le contact entre les grains de charbon actif est trop faible, la résistance électrique du matériau régénérable devient trop élevée et le courant électrique ne circule plus correctement. Pour remédier à ce problème, cette demande de brevet américain US 2013/0137567 propose l'installation d'un élément vibrant destiné à homogénéiser les contacts entre les granules de charbon actif. Cette solution n'est toutefois pas optimale : la présence de cet élément vibrant rend le dispositif plus complexe, plus couteux à fabriquer, et difficile à reproduire sur une installation de grande dimension. En outre, même homogénéisé à l'aide de l'élément vibrant, le matériau régénérable constitué de charbon actif sous forme de granulés présente une résistance électrique élevée, ce qui fait que la puissance électrique nécessaire pour obtenir une régénération suffisante est élevée.

Un des objectifs de la présente invention est de proposer un nouveau procédé régénératif d'élimination des siloxanes d'un biogaz plus efficace que ceux de l'art antérieur.

D'autres procédés régénératifs d'adsorption de contaminants dans des flux gazeux ont été décrits dans l'art antérieur. On peut notamment citer celui décrit dans la demande de brevet DE 19828593 A1. Ce document divulgue un dispositif d'adsorption de contaminants dans des fluides liquides et gazeux (par exemple, du biogaz). Ce dispositif a la particularité de permettre une régénération du matériel d'adsorption en continu, et en parallèle avec le processus d'adsorption. Le matériel d'adsorption est séparé en différentes zones isolées les unes des autres de telle façon que certaines zones sont en phase d'adsorption tandis que les autres sont en phase de régénération. Néanmoins, ce document ne traite pas spécifiquement de l'élimination des siloxanes dans du biogaz.

La demande de brevet européen EP 0818617 A décrit un agencement moteur comprenant un moteur à gaz alimenté en gaz carburant, un convertisseur catalytique placé en aval du moteur à gaz et un dispositif de nettoyage qui adsorbe les contaminants contenus dans le gaz, ce dispositif étant placé en amont du moteur. Les principaux contaminants visés par cette invention sont les siloxanes, contenus dans du biogaz. L'adsorbant est un filtre de charbon actif. Toutefois, sa régénération s'effectue à des températures très élevées (entre 350 et 450°C).

La demande de brevet américain US 2012/0024157 A1 décrit un procédé de purification de biogaz. Ce procédé est basé sur l'utilisation de plusieurs couches d'adsorbants qui permettent d'adsorber, entre autres, l'eau, le sulfure d'hydrogène et les siloxanes contenus dans le biogas. Le filtre utilisé pour adsorber les siloxanes est en charbon actif. La régénération de ce filtre peut se faire par chauffage jusqu'à 200°F.

On peut également citer les procédés régénératifs d'adsorption de contaminants dans des flux gazeux décrits dans la demande de brevet américain US 2006/0096454 et la demande de brevet européen EP 1 170 050. Ces documents décrivent l'utilisation de charbon actif sous forme de tissu en tant que matériau adsorbant pouvant être régénéré par application d'un courant électrique. Toutefois, les composés contaminants dont l'adsorption est recherchée dans ces documents sont essentiellement les résidus de solvants comme le toluène présents dans l'air ambiant. Il n'y est pas question de la captation de composés siloxane dans un biogaz. Or, les propriétés d'adsorption et de régénération d'un matériau adsorbant dépendent en très grande partie de la nature du composé adsorbé, de sa concentration et de la nature et de la concentration des autres espèces chimiques du gaz contenant le composé contaminant. En outre, dans ces deux documents, il faut noter que l'étape de régénération durant laquelle un courant électrique est appliqué dans le matériau adsorbant est réalisée en l'absence d'un courant de balayage.

Il subsiste donc le besoin de proposer un procédé simple et peu coûteux permettant d'éliminer des siloxanes d'un biogaz puis de régénérer le matériau adsorbant. Avantageusement, on souhaite que l'adsorption des siloxanes soit élevée, mais que la régénération du matériau adsorbant consomme le moins d'énergie possible. De plus, on souhaite que la capacité d'adsorption du matériau soit maintenue aussi élevée que possible au cours des cycles adsorption-désorption.

### BREVE DESCRIPTION DE L'INVENTION

La Demanderesse a découvert que ce besoin pouvait être satisfait par la mise en œuvre d'un procédé d'élimination des siloxanes contenus dans un biogaz par adsorption sur un tissu de charbon actif, puis la régénération thermo-électrique de ce tissu de charbon actif.

La présente invention a ainsi pour objet un procédé de traitement d'un biogaz contenant des siloxanes selon la revendication 1.

### BREVE DESCRIPTION DES FIGURES

La figure 1 illustre un dispositif pouvant être mis en œuvre dans le procédé selon l'invention.
La figure 2 illustre schématiquement un programme cyclique de traitement pouvant être mis en œuvre sur le dispositif représenté sur la figure 1.
La figure 3 représente la distribution de la vitesse des flux gazeux à l'intérieur d'une chambre de filtration obtenu par modélisation.

### DESCRIPTION DETAILLEE DE L'INVENTION

Il est entendu que, dans le contexte de cette description, le terme « compris entre » doit être interprété comme incluant les bornes indiquées.

En outre, sauf indication contraire, les pourcentages exprimés dans la présente description sont des pourcentages volumiques.

L'invention a pour objet un procédé de traitement d'un biogaz. Dans la présente invention, on appelle « biogaz » un gaz combustible issu de la fermentation de déchets organiques d'origine animale ou végétale en absence d'oxygène, qui est principalement constitué de méthane et de dioxyde de carbone. Il peut s'agir d'un biogaz obtenu à partir de décharges, de stations d'épuration ou de sources agricoles.

Typiquement, le biogaz comprend de 40% à 70% de méthane et de 60% à 30% de dioxyde de carbone. En outre, le biogaz peut typiquement contenir de l'azote, de l'oxygène, de la vapeur d'eau, du sulfure d'hydrogène (H₂S), des composés organiques volatils (COV), des hydrocarbures aromatiques polycycliques (HAP), des composés halogénés, des métaux lourds et des siloxanes.

Le biogaz traité dans l'invention contient des siloxanes qui sont considérés comme des contaminants et que l'on souhaite éliminer du biogaz. Par « élimination des siloxanes », on entend dans la présente description un traitement permettant de retirer au moins en partie, de façon préférée au moins 50%, de façon plus préférée au moins 70%, de façon encore plus préférée au moins 90%, et de préférence totalement, les composés siloxanes présents dans le biogaz à traiter. Le procédé de la présente invention peut avantageusement être un procédé d'élimination des siloxanes.

Par « siloxanes » ou « composés siloxanes », on entend ici l'ensemble des composés chimiques formés de chaînes silicium-oxygène Si-O où des groupements organiques viennent se lier aux atomes de silicium. En raison de leurs propriétés physico-chimiques particulièrement intéressantes, les siloxanes sont très largement utilisées dans des procédés de fabrication et dans des produits commerciaux tels que les produits cosmétiques (crèmes, shampoings...), les produits de nettoyages et d'entretien, les vernis, résines, peintures et autres traitements de surfaces, les adhésifs et colles, les emballages plastifiés, les procédés d'ensimage et de traitement des textiles, les équipements de protection, les équipements électriques et électroniques, les pièces pour le médical et la pharmacie. En fin de vie, ces produits et les siloxanes qu'ils contiennent se retrouvent parmi les déchets ménagers et industriels, puis les siloxanes se retrouvent dans le biogaz obtenu par fermentation de ces déchets. La concentration en siloxanes dans les biogaz est très variable : des études ont montré que la concentration en siloxanes dans des biogaz pouvait aller de 1,6 mg/Nm³ pour les plus faibles valeurs relevées jusqu'à 140 mg/Nm³. De préférence, le biogaz traité dans le procédé selon l'invention contient de 5 mg/Nm³ à 250 mg/Nm³ de siloxanes.

Les siloxanes présents dans les biogaz peuvent être classés en deux familles : les siloxanes cycliques et les siloxanes linéaires. Parmi les siloxanes linéaires les plus courants, on peut citer :
- l'hexaméthyldisiloxane ou « L2 », de formule (CH₃)₃-Si-O-Si-(CH₃)₃ ;
- le décaméthyltétrasiloxane ou « L4 », de formule

   (CH₃)₃-Si-[O-Si(CH₃)₂]₂-O-Si(CH₃)₃ ;
- le dodécaméthylpentasiloxane ou « L5 », de formule

   (CH₃)₃-Si-[O-Si(CH₃)₂]₃-O-Si(CH₃)₃.

Parmi les siloxanes cycliques les plus courants, on peut citer :
- l'hexaméthylcyclotrisiloxane ou « D3 », de formule 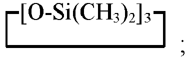
- l'octaméthylcyclotétrasiloxane ou « D4 », de formule 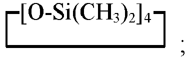
- le décaméthylcyclopentasiloxane ou « D5 », de formule

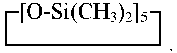

Contrairement à d'autres composés chimiques pouvant être retrouvés dans les biogaz comme par exemple les COV, l'élimination des siloxanes est particulièrement difficile car les siloxanes sont des composés chimiques peu réactifs.

Le procédé de traitement du biogaz selon l'invention comprend une étape (a) consistant à filtrer un flux de biogaz contenant des siloxanes avec un filtre en tissu de charbon actif à de façon à adsorber des siloxanes dans ledit filtre.

Le charbon actif est un matériau bien connu de l'homme du métier notamment pour ses utilisations comme adsorbant. Il peut se présenter sous diverses formes, par exemple sous forme de granulés ou GAC (pour « Granular Activated Carbon ») ou sous forme de poudre ou PAC (pour « Powdered Activated Carbon »), qui sont les formes les plus courantes. Le charbon actif sous forme de poudre peut être mis en œuvre avec un liant pour former des blocs solides. Le charbon actif peut également être obtenu sous forme de fibres qui peuvent être mises en œuvre pour former des tissus ou des feutres. Dans la présente invention, le filtre est un tissu de charbon actif ou ACC (pour « Activated Carbon Cloth »). Il peut être choisi parmi les tissus tissés et les tissus tricotés. L'aspect d'un tissu de charbon actif est celui d'un tissu ordinaire. La structure souple du tissu de charbon actif permet une mise en forme facile. Son épaisseur peut être comprise entre 0 mm et 5 mm, de manière préférée entre 0 mm et 2 mm et de manière plus préférée entre 0 mm et 1 mm. En raison de la porosité des fibres de charbon actif et de leur tissage ou tricotage, le tissu de charbon actif présente une surface spécifique élevée, de manière préférée supérieure à 1000 m²/g, de manière plus préférée supérieure à 1500 m²/g et de manière encore plus préférée supérieure à 2000 m²/g, mesurée selon la méthode B.E.T. (Brunauer-Emmett-Teller). Le volume poreux peut être de manière préférée supérieur à 0,3 cm³/g, de manière plus préférée supérieur à 0,5 cm³/g et de manière encore plus préférée supérieur à 1,0 cm³/g. La structure est préférentiellement microporeuse, c'est-à-dire pourvue des pores dont le diamètre n'excède pas les 2 nanomètres. Le pourcentage en volume microporeux est de manière préférée supérieur à 30 %, de manière plus préférée supérieur à 50 % et de manière encore plus préférée supérieur à 75 %.

Des tissus de charbon actifs sont actuellement disponibles dans le commerce pour des applications telles que la filtration, l'adsorption et la séparation. On peut citer notamment les tissus tissés et les tissus tricotés disponibles chez Calgon Carbon sous le nom de Zorflex® ACC.

L'étape (a) du procédé selon l'invention correspond à la phase d'adsorption par le filtre en tissu de charbon actif des siloxanes contenus dans le biogaz. Pour ce faire, un flux gazeux de biogaz est envoyé sur l'une des faces du filtre. Lorsque le gaz traverse le filtre, au moins une partie des composés siloxanes sont adsorbés par le filtre. L'adsorption est de préférence réalisée à une température comprise entre 0°C et 100°C, plus préférentiellement entre 0°C et 50°C, et encore plus préférentiellement entre 0°C et 35°C. En outre, la pression du biogaz lors de l'étape (a) de filtration est de préférence comprise entre 0 bar et 20 bar, plus préférentiellement entre 0 bar et 10 bar, et encore plus préférentiellement entre 0 bar et 1 bar (en pression relative, par différence avec la pression atmosphérique).

Le flux gazeux recueilli à la sortie du filtre présente avantageusement une concentration en siloxanes inférieure à 2 mg/Nm³, de préférence inférieure à 1 mg/Nm³, et plus préférentiellement comprise entre 0 et 0,5 mg/Nm³.

L'étape (a) de filtration est poursuivie pendant un temps notée Ta. Selon un mode de réalisation, l'étape (a) est arrêtée au bout d'un temps défini préalablement et qui correspond de préférence à la saturation du filtre. Selon un autre mode de réalisation, la concentration en siloxane est mesurée en continu dans le flux gazeux recueilli à la sortie du filtre. L'étape (a) peut être arrêtée lorsque la concentration en siloxane mesurée dépasse un seuil défini préalablement, de préférence d'environ 5 mg/Nm³, plus préférentiellement d'environ 3 mg/Nm³, et encore plus préférentiellement d'environ 1 mg/Nm³. Le temps Ta est de façon préférée compris entre 1 heure et 24 heures, et de façon plus préférée entre 8 heures et 24 heures.

Le procédé de traitement du biogaz selon l'invention comprend en outre une étape (b1) consistant à régénérer ledit filtre. Cette étape (b1) correspond à la phase de désorption des siloxanes par le filtre en tissu de charbon actif. Contrairement aux filtres constitués de poudre ou de granulés de charbon actif, un filtre en tissu de charbon actif est un bon conducteur électrique. Il est donc possible de faire circuler un courant électrique dans le filtre. De préférence, le filtre est connecté à deux électrodes et relié à un générateur électrique. De préférence, on applique au filtre un courant électrique continu. La circulation du courant électrique dans le filtre crée de la chaleur par effet Joule.

Simultanément au passage du courant électrique, le filtre est soumis à un flux gazeux de balayage. Pour ce faire, un flux gazeux de balayage est envoyé sur l'une des faces du filtre. Le gaz de balayage est de préférence choisi dans le groupe constitué par l'air, l'air appauvri, un gaz inerte tel que l'azote ou le dioxyde de carbone, du méthane ou un biogaz déjà traité. De façon très préférée, le gaz de balayage est de l'air. Le passage du flux gazeux de balayage lors de l'étape (b1) peut être réalisé en co-courant ou à contre-courant par rapport au passage du biogaz lors de l'étape (a). Le gaz de balayage peut lui-même être chauffé pour maintenir ou accélérer le chauffage du filtre. Si le gaz n'est pas chauffé, son débit est optimisé pour ne pas refroidir le filtre.

Eventuellement, le procédé de traitement comprend également une étape (b2) de destruction thermique du gaz de balayage utilisé à l'étape (b1). La destruction du gaz de balayage, du fait de son débit faible, peut être réalisée par un brûleur gaz très pauvre, nécessitant seulement entre 1 et 10% en volume de méthane, préférentiellement entre 1 et 6%, et encore plus préférentiellement entre 1 et 3%, pour un fonctionnement auto-thermique.

Dans le cas d'une régénération du filtre par chauffage indirect par air chaud, tel qu'elle est mise en œuvre classiquement, des débits d'air chaud de 100-500 m³/h pouvant atteindre 1000 m³/h sont nécessaires. La destruction de cet air chaud nécessite alors des volumes de méthanes beaucoup plus importants, notamment par l'utilisation d'un brûleur plus classique qui consomme environ 10 à 15% en volume de méthane. Dans le cas de l'invention, la combinaison des étapes b1) et b2) est donc de ce fait économiquement très intéressante.

Selon un autre mode de réalisation possible, le gaz de balayage peut également être détruit par un système d'oxydation thermique régénérative ou non régénérative. Les impuretés de type siloxane sont de préférence oxydées à des températures élevées, typiquement de 800 à 850°C ou même plus pendant une durée de 1 à 2 secondes, avant le rejet dans l'atmosphère.

Lorsque le gaz de balayage traverse le filtre chauffé, au moins une partie des composés siloxanes adsorbés dans le filtre sont desorbés. La désorption est réalisée à une température comprise entre 100°C et 300°C, préférentiellement entre 150°C et 300°C, et encore plus préférentiellement entre 200°C et 300°C. En outre, la pression du gaz de balayage lors de l'étape (b1) de régénération est de préférence comprise entre 0 bar et 1 bar, plus préférentiellement entre 0 bar et 0,5 bar, et encore plus préférentiellement entre 0 bar et 0,2 bar (en pression relative, par différence avec la pression atmosphérique).

Les inventeurs ont constaté que la régénération d'un filtre en tissu de charbon actif par l'action combinée d'un chauffage par effet Joule et d'un balayage gazeux permettait une désorption efficace des composés contaminant le filtre avec moins de dépenses énergétiques que les procédés connus de l'art antérieur. En effet, le chauffage par effet Joule est une méthode de chauffage directe moins énergivore que le chauffage indirect classique par un flux de balayage chaud. En outre, le filtre en tissu de charbon actif est particulièrement approprié à cette technique de chauffage en raison de sa bonne conduction électrique. Enfin, le balayage gazeux permet une élimination plus rapide des composés désorbés sans complexifier le procédé et le dispositif, à l'inverse des techniques utilisant une mise sous vide. Contrairement aux procédés de l'art antérieur, l'air peut être avantageusement utilisé comme gaz de balayage pour des raisons de coût et de simplicité, sans risquer d'abimer le filtre en tissu de charbon actif en raison de la température nécessaire à la désorption des composés siloxanes. Les filtres mettant en œuvre un tissu de charbon actif comme matériau adsorbant ont une taille significativement moins importante par rapport à une solution classique utilisant le charbon actif en grains. Cette réduction de taille est notamment due à une capacité d'adsorption plus élevée. Par ailleurs, les vitesses d'adsorption et de désorption de filtres mettant en œuvre un tissu de charbon actif comme matériau adsorbant sont plus importantes que celles de filtres classiques. Ces vitesses plus importantes contribuent également à une réduction de la quantité du matériau nécessaire pour traiter un flux constant. Il est possible de diminuer le débit de gaz de balayage. L'éventuel retraitement ou destruction de ce gaz est alors plus simple. La taille générale des équipements peut être diminuée, ce qui peut réduire le cout d'investissement. Un autre avantage du procédé selon l'invention est qu'il n'est pas le siège d'un phénomène de recombinaisons chimiques de certains silanols et/ou siloxanes, à savoir notamment le triméthylsilanol (TMS) qui peut se transformer en hexamethyldisiloxane (L2) par condensation. Ces recombinaisons peuvent entrainer des relargages significatifs et non prédictibles. L'absence de ces recombinaisons permet d'augmenter significativement l'efficacité et la robustesse du procédé de traitement du biogaz selon l'invention.

L'étape (b1) de régénération est poursuivie pendant un temps notée Tb. Selon un mode de réalisation, l'étape (b1) est arrêtée au bout d'un temps défini préalablement et qui correspond de préférence à la régénération maximale du filtre. Selon un autre mode de réalisation, la concentration en siloxane est mesurée en continu dans le flux gazeux de balayage recueilli à la sortie du filtre. L'étape (b1) peut être arrêtée lorsque la concentration en siloxane mesurée passe en dessous d'un seuil défini préalablement. Le temps Tb de l'étape de régénération est de préférence inférieur au temps Ta de l'étape d'adsorption. Le temps Tb est de façon préférée compris entre 1 heure et 16 heures, et de façon plus préférée entre 1 heure et 8 heures.

A la fin de l'étape (b1) de régénération, le filtre peut être réutilisé dans une nouvelle étape (a) de filtration. Toutefois, selon un mode de réalisation préféré de l'invention, le procédé de traitement comprend également une étape (c), après l'étape (b1) et avant une éventuelle nouvelle étape (a). Cette étape (c) consiste à rincer le filtre en le soumettant à un flux de méthane dépourvu de siloxanes. Selon un mode de réalisation très préféré, ce flux de méthane dépourvu de siloxane, également appelé gaz de rinçage, peut être du biogaz qui a été préalablement traité par le procédé selon l'invention. Toutefois, il est possible d'employer d'autres sources gazeuses dans la limite où le gaz est riche en méthane, voire est constitué de méthane, et ne contient pas de siloxanes. Cette étape (c) de rinçage est particulièrement utile dans le cas où le gaz de balayage utilisé dans l'étape (b1) est de l'air. Elle permet de chasser l'air présent dans le filtre et de le remplacer par du méthane. Ainsi, à la reprise d'une nouvelle étape (a) de filtration, le gaz traité obtenu au démarrage de la filtration n'est pas contaminé par des restes du gaz de balayage, notamment d'air. En outre, lors de cette étape (c) de rinçage, on peut refroidir le filtre jusqu'à une température compatible avec l'étape (a) d'adsorption.

Le passage du flux gazeux de rinçage lors de l'étape (c) peut être réalisé en co-courant ou à contre-courant par rapport au passage du biogaz lors de l'étape (a), et en co-courant ou à contre-courant par rapport au passage du gaz de balayage lors de l'étape (b1).

L'étape (c) de rinçage est poursuivie pendant un temps notée Tc. Selon un mode de réalisation, l'étape (c) est arrêtée au bout d'un temps défini préalablement. Selon un autre mode de réalisation, la concentration en gaz de balayage, par exemple en air, est mesurée en continu dans le flux gazeux recueilli à la sortie du filtre. L'étape (c) peut être arrêtée lorsque la concentration en gaz de balayage mesurée passe en dessous d'un seuil défini préalablement. Alternativement ou en plus, la température du filtre peut être mesurée en continu. L'étape (c) peut être arrêtée lorsque la température du filtre passe en dessous d'un seuil défini préalablement. Le gaz de rinçage récupéré à la fin de l'étape c) peut également être détruit, de la même manière que le gaz de balayage à l'étape (b2).

Le procédé de traitement du biogaz selon l'invention peut être un procédé cyclique, chaque cycle comprenant une étape (a) de filtration puis une étape (b1) de régénération, suivie éventuellement d'une étape (c) de rinçage. Les étapes peuvent s'enchaîner directement les unes à la suite des autres ou des temps d'arrêts peuvent être prévus entre des étapes. Un procédé cyclique ne pouvant pas traiter un flux continu de gaz entrant, il est possible de mettre en œuvre plusieurs dispositifs de traitement fonctionnant en parallèle, au moins un dispositif étant en phase de filtration lorsqu'un autre dispositif est en phase de régénération ou de rinçage ou à l'arrêt.

Selon un mode de réalisation particulier, le procédé de traitement peut être mis en œuvre dans une unité disposant de deux dispositifs de traitement parallèle. Une étape (a) de filtration peut être menée dans le premier dispositif de traitement. Après une durée Ta, l'étape (a) de filtration est arrêtée dans le premier dispositif et commence dans le second dispositif de traitement. Pendant la durée de l'étape de filtration dans le second dispositif, le premier dispositif est soumis à l'étape (b1) de régénération durant un temps Tb, puis éventuellement à l'étape (c) de rinçage durant un temps Tc. Si, à la fin de l'étape (b1) de régénération ou éventuellement de l'étape (c) de rinçage, l'étape (a) de filtration dans le second dispositif n'est pas terminée, le premier dispositif est arrêté. Enfin, lorsque l'étape (a) de filtration est terminée dans le second dispositif, elle recommence dans le premier dispositif, et le second dispositif peut à son tour être régénéré.

L'invention décrit également un dispositif destiné à la mise en œuvre du procédé décrit ci-dessus. Ce dispositif de traitement d'un biogaz contenant des siloxanes comprend :
- une chambre de filtration munie d'au moins un premier orifice permettant l'entrée de gaz et d'au moins un second orifice permettant la sortie de gaz ;
- un filtre en tissu de charbon actif placé dans ladite chambre de filtration et connecté à deux électrodes ;
- un moyen pour faire circuler un courant électrique dans ledit filtre en tissu de charbon actif relié auxdites deux électrodes ;
- un moyen permettant d'injecter du gaz de balayage dans la chambre de filtration,
- et éventuellement un moyen permettant de détruire le gaz de balayage sortant de la chambre de filtration.

La chambre de filtration et les éléments se trouvant à l'intérieur sont de préférence construits en matériaux résistant aux températures les plus élevées mises en œuvre notamment lors de l'étape (b1) de régénération. Il n'est pas nécessaire que ces installations soient prévues pour une mise sous vide. La géométrie et le dimensionnement de la chambre de filtration peuvent varier notamment en fonction du débit de biogaz à traiter et de la concentration en composés siloxanes à éliminer. De préférence, la chambre de filtration est cylindrique. Ce type de géométrie est avantageux car elle permet d'obtenir des flux gazeux homogènes sur l'ensemble du filtre.

La chambre de filtration est munie d'au moins un premier orifice permettant l'entrée de gaz. Selon l'étape du procédé de traitement mise en œuvre, la nature du gaz entrant dans la chambre varie : biogaz lors de l'étape (a), gaz de balayage dans l'étape (b1) et éventuellement gaz de rinçage dans l'étape (c). Ils peuvent entrer par le même orifice relié à plusieurs lignes d'alimentation munies de vannes. Alternativement, chaque ligne d'alimentation en gaz peut déboucher sur son propre orifice dans la chambre de filtration. En outre, un orifice d'entrée pour un gaz peut être un orifice de sortie pour un autre et réciproquement.

La chambre de filtration est munie également d'au moins un second orifice permettant la sortie de gaz. Selon l'étape du procédé de traitement mise en œuvre, la nature du gaz sortant de la chambre varie : biogaz traité lors de l'étape (a), gaz de balayage dans l'étape (b1) et éventuellement gaz de rinçage dans l'étape (c). Ils peuvent sortir par le même orifice relié à plusieurs lignes munies de vannes ou par plusieurs orifices différents. De façon très préférée, le biogaz traité récupéré lors de l'étape (a) est conduit dans un dispositif aval de stockage, ou dans un autre dispositif de traitement, par exemple d'élimination du CO₂ pour la production de biométhane ou de biocarburant, ou dans un appareil consommant le biogaz en tant que combustible, par exemple des moteurs de cogénération produisant électricité et chaleur. En sortie de chambre de filtration, le dispositif de traitement comprend éventuellement un moyen permettant de détruire le gaz de balayage récupéré lors de l'étape (b1) et éventuellement le gaz de rinçage récupéré lors de l'étape (c), par exemple une torche ou un système d'oxydation thermique régénérative ou non régénérative.

La chambre de filtration contient au moins un filtre en tissu de charbon actif. La géométrie, le dimensionnement et le nombre de filtres placés dans une chambre de filtration peuvent varier notamment en fonction du débit de biogaz à traiter et de la concentration en composés siloxanes à éliminer. Lorsque la chambre de filtration est de géométrie cylindrique, le filtre peut être enroulé ou plissé. Pour permettre la mise en œuvre de l'étape (b1) de régénération du procédé de traitement, le filtre est connecté à au moins deux électrodes, et le dispositif comprend un moyen pour faire circuler un courant électrique dans le filtre en tissu de charbon actif relié auxdites deux électrodes. De préférence, la géométrie du filtre et le positionnement des électrodes permet un chauffage homogène du filtre par effet Joule.

Enfin, pour permettre la mise en œuvre de l'étape (b1) de régénération du procédé de traitement, le dispositif comprend un moyen permettant d'injecter du gaz de balayage dans la chambre de filtration. Ce moyen peut consister par exemple en une soufflerie.

En fonction notamment du débit de biogaz à traiter, le dispositif de traitement peut comprendre plusieurs chambres de filtrations disposées en parallèle. De plus, pour assurer un traitement continu d'un flux de biogaz, plusieurs dispositifs de traitement tels que décrits ci-dessus peuvent être disposés en parallèle pour constituer ensemble une unité de traitement au fonctionnement continu. L'invention décrit également une unité de traitement comprenant plusieurs dispositifs de traitement tels que définis ci-dessus disposés en parallèle pour fonctionner en continu.

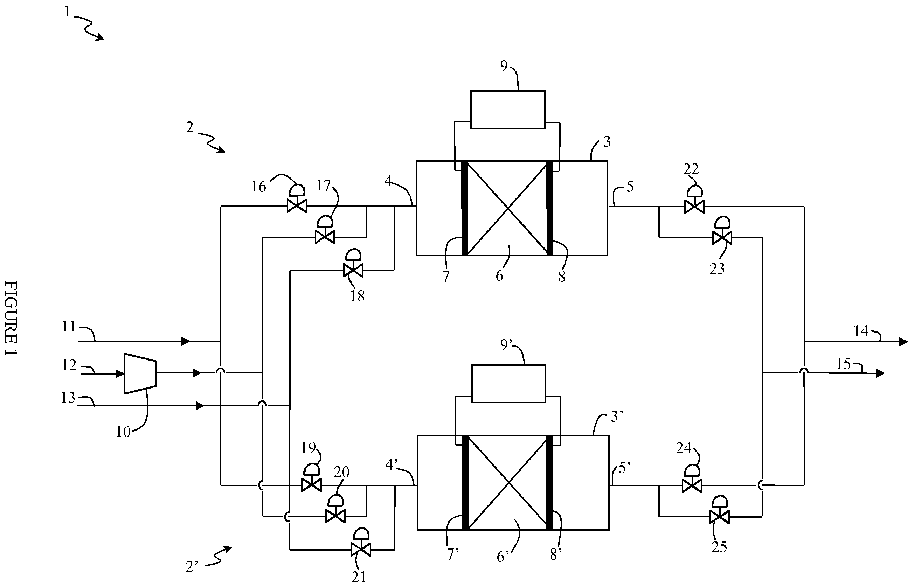

La **figure 1** représente une unité de traitement **1** comprenant deux dispositifs **2** et **2'** disposés en parallèle. Chaque dispositif **2**, **2'** comprend :
- une chambre de filtration **3**, **3'** munie d'au moins un premier orifice **4**, **4**' permettant l'entrée de gaz et d'au moins un second orifice **5**, **5**' permettant la sortie de gaz ;
- un filtre en tissu de charbon actif **6**, **6**' placé dans ladite chambre de filtration **3**, **3**' et connecté à deux électrodes **7**, **7**', **8**, **8**' ;
- un moyen **9**, **9'** pour faire circuler un courant électrique dans ledit filtre **6**, **6'** en tissu de charbon actif relié auxdites deux électrodes ;
- un moyen **10** permettant d'injecter du gaz de balayage dans la chambre de filtration **3**, **3'**.

En outre, l'unité de traitement **1** est munie d'un conduit d'alimentation en biogaz à traiter **11**, d'un conduit d'alimentation en gaz de balayage **12**, qui est de préférence de l'air, et d'un conduit d'alimentation en gaz de rinçage **13** qui est de préférence du biogaz préalablement traité dans l'unité. Chaque conduit d'alimentation est divisé pour alimenter les deux dispositifs **2** et **2'** et des vannes **16**, **17**, **18**, **19**, **20** et **21** sont placées sur les conduits d'alimentation pour sélectionner les flux gazeux à introduire dans les deux dispositifs. En sortie, l'unité de traitement **1** est munie d'un conduit de sortie du biogaz traité **14** et d'un conduit de sortie des autres effluents gazeux **15**, notamment le gaz de balayage utilisé et le gaz de rinçage utilisé. Chaque conduit de sortie rassemble les effluents des deux dispositifs **2** et **2'** et des vannes **22**, **23**, **24** et **25** sont placées sur les conduits de sortie.

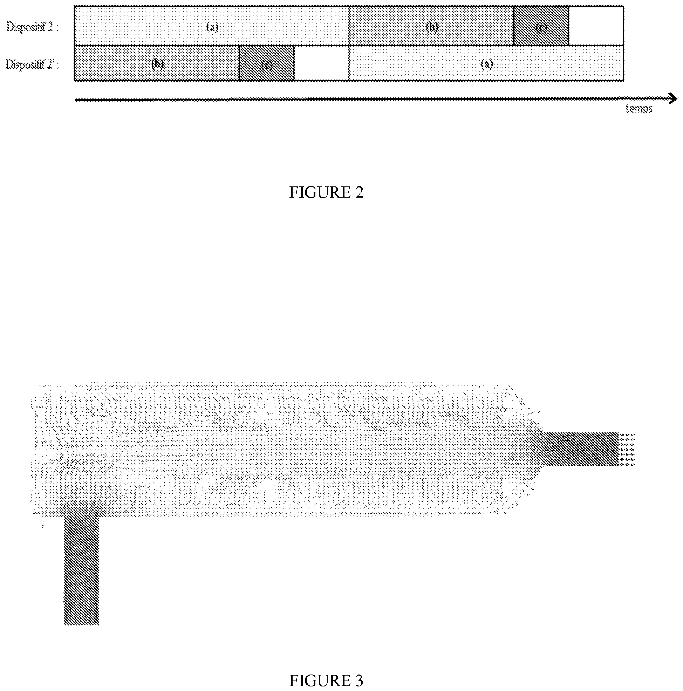

Lors de la mise en œuvre le procédé de traitement du biogaz objet de l'invention, l'unité de traitement **1** peut être opérée selon le schéma représenté sur la **figure 2** : celle-ci représente la succession des cycles de traitement en parallèle sur les dispositifs **2** et **2'**. Les durées relatives des étapes ne sont données qu'à titre d'exemple.

Selon la **figure 2****,** le dispositif **2** commence par une étape (a) de filtration. Pour cela, les vannes **16** et **22** sont ouvertes tandis que les vannes **17**, **18** et **23** sont fermées. La chambre de filtration **3** est alimentée en biogaz arrivant par le conduit **11**. En passant à travers le filtre **6**, les composés siloxanes contaminants sont adsorbés. Le biogaz traité est récupéré en sortie de la chambre **3** via la conduite **14**. L'étape (a) est menée pendant une durée Ta.

Lorsque l'étape (a) est terminée, les vannes **16** et **22** sont fermées. Le cycle de traitement continu immédiatement avec une étape (b1) de régénération du filtre **6**. Pour cela, les vannes **17** et **23** sont ouvertes. On fait circuler un courant électrique continu dans ledit filtre **6** relié aux électrodes **7** et **8** grâce au générateur de courant **9**. Par effet Joule, le filtre **6** chauffe. Un flux d'air est employé comme gaz de balayage. Il est introduit dans la chambre de filtration **3** par le conduit d'alimentation **12** à l'aide de la soufflerie **10**. Sous l'effet du chauffage et du balayage, les contaminants siloxanes sont désorbés du filtre **6** et le gaz de balayage utilisé est rejeté par le conduit **15**. L'étape (b1) est menée pendant une durée Tb à l'issue de laquelle le filtre **6** est considéré comme régénéré.

Lorsque l'étape (b1) est terminée, la vanne **17** est fermée et on arrête le courant électrique passant dans le filtre **6**. Le cycle de traitement continu immédiatement avec une étape (c) de rinçage du filtre **6**. En effet, à la fin de l'étape (b1), le filtre **6** et la chambre de filtration **3** contiennent de l'air. Pour éviter de faire entrer de l'air dans le biogaz au moment où le filtre **6** passera à nouveau dans une phase de filtration, il est préférable d'évacuer l'air. Pour cela, la vanne **18** est ouverte. Un flux de biogaz préalablement traité, provenant par exemple de la ligne **14**, est introduit dans la chambre de filtration **3** par le conduit d'alimentation **13**. Le gaz de rinçage utilisé, contenant de l'air, est rejeté par le conduit **15**. L'étape (c) est menée pendant une durée Tc.

A la fin de l'étape (c), les vannes **18** et **23** sont fermées. Le dispositif **2** est prêt pour recommencer à nouveau une phase (a) de filtration. Dans le cycle décrit sur la **figure 2**, le dispositif **2** est arrêté pendant une durée suffisante pour que la phase (a) soit terminée sur le dispositif **2'**, soit pendant une durée Tₐᵣᵣₑₜ telle que Tₐᵣᵣₑₜ = Ta -Tb -Tc.

Le dispositif **2'** est opéré de la même manière que le dispositif **2** à l'aide des vannes **19**, **20**, **21**, **24** et **25**, mais avec un décalage dans le temps des phases. Ainsi, lorsque le dispositif **2** commence une phase (a) de filtration, le dispositif **2'** commence une phase (b1) de régénération, et lorsque le dispositif **2** termine la phase (a) de filtration pour passer à la phase (b1) de régénération, c'est le dispositif **2'** qui commence une phase (a) de filtration. De cette manière, il y a en permanence un des deux dispositifs qui est en phase (a) de filtration, ce qui permet d'assurer un traitement continu du biogaz arrivant par le conduit d'alimentation **11**.

### EXEMPLES

### Exemple 1 :

Le tissu de charbon actif utilisé est celui commercialisé par la société Carbon Cloth International sous la dénomination Zorflex® Knitted Cloth FM30K.

Des échantillons de tissu de charbon actif préalablement séchés à l'étuve ont été chargés en siloxanes dans un réacteur statique. Pour cela, le composé siloxane désiré a été introduit dans le réacteur sous forme liquide afin de saturer l'atmosphère à l'intérieur du réacteur. Les échantillons ont été ainsi confinés pendant 24 heures.

Environ 20 mg de tissu chargé en siloxane ont été prélevés et introduits dans un analyseur thermogravimétrique (SETSYS Evolution ou TG-DSC 111 de Setaram). Chaque échantillon a été soumis à un gradient de température de 10°C par minutes entre 20°C et 105°C, puis à un palier à 105°C pendant 30 minutes afin de désorber l'eau contenue dans les pores du tissu, et enfin à un gradient de température de 10°C par minute jusqu'à 300°C. La variation de la masse de l'échantillon a été mesurée au moyen d'une microbalance. La variation de la masse en fonction du temps a été étudiée en fonction de la température. La température de désorption est prise à la vitesse de désorption maximale.

Le tableau 1 ci-dessous présente les résultats obtenus pour différents siloxanes :

**Tableau 1**

| Siloxane | Point d'ébullition (°C) | Température de vitesse maximale de désorption (°C) | Vitesse de désorption (mg.g⁻¹.min⁻¹) |
|---|---|---|---|
| Hexaméthyldisiloxane | 101 | 110 | -7,9 |
| Décaméthyltétrasiloxane | 194 | 180 | -4,2 |
| Dodécaméthylpentasiloxane | 230 | 200 | -5,2 |
| Octaméthylcyclotétracyloxane | 175 | 170 | -5,8 |
| Décaméthylcyclopentasiloxane | 211 | 200 | -5,3 |

On constate que les températures pour lesquelles la vitesse de désorption est la plus grande sont comprises entre 110°C et 200°C. Les vitesses de désorption sont toutes du même ordre de grandeur, comprises entre 4 mg.g⁻¹.min⁻¹ et 8 mg.g⁻¹.min⁻¹. Ces données permettent de concevoir et de dimensionner le système de traitement.

### Exemple 2 :

Les écoulements gazeux à l'intérieur d'une chambre de filtration cylindrique munie d'un filtre enroulé ont été modélisés avec les paramètres suivants :
- alimentation en biogaz : 500 Nm³/h
- surface de passage filtrante : 1,54 m².

La distribution de la vitesse des flux gazeux est représentée sur la figure 3 : le blanc correspond à une vitesse de 0 m/s, puis plus la vitesse est grande, plus la couleur est foncée, jusqu'au noir qui correspond à une vitesse de 20 m/s.

On constate bien sur cette figure 3 que les vitesses sont homogènes dans l'ensemble de la chambre de filtration.

### Exemple 3 :

Le dispositif de traitement comprend deux filtres en parallèle, chaque filtre étant un filtre circulaire de 30 centimètres de diamètre et de 75 centimètres de long. Ce filtre est constitué de 20 couches du tissu de charbon actif Zorflex FM 30 K (Calgon Carbon).

Le biogaz traité dans cet exemple est issu d'une station d'épuration avec un débit de 500 Nm³/h, et contient des siloxanes à une concentration de 100 mg/Nm³. La vitesse linéaire du biogaz pour cette surface de passage filtrante est de 20 cm/s et les pertes de charges s'élèvent à 4 mbar. La pression du biogaz en entrée est de 0,1 bar (pression relative).

L'étape (a) de filtration est conduite pendante une durée Ta d'une heure, à une température d'adsorption de 35°C. La concentration en siloxanes en sortie du dispositif de traitement est inférieure à 0,1 mg/Nm³.

L'étape (b1) de régénération est conduite pendante une durée Tb de 15 minutes, à une température de 250°C. Un flux d'air à une pression de 0,05 bar (pression relative) est utilisé comme gaz de balayage.

### Exemple 4 :

Cet exemple décrit l'étape facultative (b2) de destruction thermique du gaz de balayage en sortie de la chambre de filtration. Plus précisément, il illustre la différence de consommation en biogaz nécessaire pour régénérer le filtre, c'est-à-dire pour brûler le gaz de balayage, entre un procédé de régénération utilisant un chauffage par effet Joule combiné à un flux gazeux de balayage (cas de la présente invention), et un procédé de régénération utilisant uniquement un flux d'air chaud, sans effet Joule.

### • Régénération par chauffage par effet Joule combiné à un flux gazeux de balayage

Le flux gazeux de balayage à éliminer est issu d'un essai de traitement de biogaz conformément à l'exemple 3 supra. A la différence de l'exemple 3, le flux gazeux de balayage est un flux d'air appauvri (environ 10% d'oxygène en volume) circulant à un débit de 25 m³/h. Ce flux est ensuite détruit en sortie de chambre de filtration, par un brûleur gaz très pauvre (de type FLOX® à oxydation sans flamme) qui fonctionne avec un pourcentage de méthane égal à 2,5% en volume. Le biogaz brut contenant 60% de méthane, le volume de biogaz brut à ajouter pour le fonctionnement du brûleur est de 1,1 m³/h. Sur une journée, le filtre est régénéré 12 fois avec un temps de régénération de 30 minutes. La consommation totale en biogaz pour la régénération est donc de 6,4 m³/jour.

### • Régénération par flux d'air chaud uniquement

Un procédé de régénération utilisant de l'air chaud uniquement nécessite un débit de régénération de 250 m³/h. Le flux d'air chaud est ensuite détruit par un brûleur gaz pauvre qui fonctionne avec un pourcentage de méthane égal à 12,5% en volume. Le biogaz brut contenant 60% de méthane, le volume de biogaz brut à ajouter pour le fonctionnement du brûleur est de 59,5 m³/h. Sur une journée, le filtre est régénéré une seule fois avec un temps de régénération de 2,5 heures. La consommation totale en biogaz pour la régénération est donc de 148,8 m³/jour.

La consommation journalière de biogaz est donc réduite d'un facteur 23, ce qui représente un avantage économique non négligeable pour l'utilisateur.

## Revendications

1. Procédé de traitement d'un biogaz contenant des siloxanes **caractérisé en ce qu'**il comprend les étapes consistant à :
a) filtrer un flux de biogaz contenant des siloxanes avec un filtre en tissu de charbon actif de façon à adsorber des siloxanes dans ledit filtre, puis
b1) régénérer ledit filtre en faisant circuler un courant électrique dans ledit filtre soumis à un flux gazeux de balayage, puis
b2) éventuellement détruire thermiquement ledit gaz de balayage,
la phase (b1) de régénération est réalisée à une température comprise entre 100°C et 300°C, plus préférentiellement entre 150°C et 300°C, et encore plus préférentiellement entre 200°C et 300°C.

2. Procédé selon la revendication 1, **caractérisé en ce que** la concentration en siloxane est mesurée en continu dans le flux gazeux recueilli à la sortie du filtre lors de l'étape (a), et que l'étape (a) est arrêtée lorsque la concentration en siloxane mesurée dépasse un seuil défini préalablement, de préférence d'environ 5 mg/Nm³, plus préférentiellement d'environ 3 mg/Nm³, et encore plus préférentiellement d'environ 1 mg/Nm³.

3. Procédé selon l'une ou l'autre des revendications 1 et 2, **caractérisé en ce que** le gaz de balayage lors de l'étape (b1) est de l'air.

4. Procédé selon l'une quelconque des revendications 1 à 3, **caractérisé en ce que** la pression relative du gaz de balayage lors de l'étape (b1) est comprise entre 0 bar et 1 bar, plus préférentiellement entre 0 bar et 0,5 bar, et encore plus préférentiellement entre 0 bar et 0,2 bar.

5. Procédé selon l'une quelconque des revendications 1 à 4, **caractérisé en ce que** le procédé de traitement comprend également une étape (c) consistant à rincer le filtre en le soumettant à un flux de méthane dépourvu de siloxanes.

6. Procédé selon la revendication 5, **caractérisé en ce que** ledit flux de méthane dépourvu de siloxane est du biogaz qui a été préalablement traité par le procédé selon l'une quelconque des revendications précédentes.

7. Procédé selon l'une ou l'autre des revendications 5 et 6, **caractérisé en ce que**, lors de l'étape (c), la concentration en gaz de balayage est mesurée en continu dans le flux gazeux recueilli à la sortie du filtre et la température du filtre est mesurée en continu, et que l'étape (c) est arrêtée lorsque :
- la concentration en gaz de balayage mesurée passe en dessous d'un seuil défini préalablement et
- la température du filtre passe en dessous d'un seuil défini préalablement.

## Patentansprüche

1. Verfahren zur Behandlung eines siloxanhaltigen Biogases, **dadurch gekennzeichnet, dass** es die folgenden Schritte umfasst: :
a) Filtern eines siloxanhaltigen Biogasstroms mit einem Aktivkohle-Gewebefilter, um Siloxane in diesem Filter zu adsorbieren, und dann
b1) Regenerieren des Filters, indem ein elektrischer Strom durch den Filter geleitet wird, der einem Spülgasstrom ausgesetzt ist, und dann
b2) gegebenenfalls die thermische Zerstörung des besagten Spülgases,
wobei die Regenerationsphase (b1) bei einer Temperatur zwischen 100°C und 300°C, noch bevorzugter zwischen 150°C und 300°C und noch bevorzugter zwischen 200°C und 300°C durchgeführt wird.

2. Verfahren nach Anspruch 1, **dadurch gekennzeichnet, dass** die Siloxankonzentration in dem am Ausgang des Filters in Schritt (a) gesammelten Gasstrom kontinuierlich gemessen wird, und dass Schritt (a) beendet wird, wenn die gemessene Siloxankonzentration einen vorher festgelegten Schwellenwert, vorzugsweise etwa 5 mg/Nm³, noch bevorzugter etwa 3 mg/Nm³ und noch bevorzugter etwa 1 mg/Nm³, überschreitet.

3. Verfahren nach einem der Ansprüche 1 und 2, **dadurch gekennzeichnet, dass** das Spülgas in Schritt (b1) Luft ist.

4. Verfahren nach einem der Ansprüche 1 bis 3, **dadurch gekennzeichnet, dass** der relative Druck des Spülgases in Schritt (b1) zwischen 0 bar und 1 bar, bevorzugter zwischen 0 bar und 0,5 bar und noch bevorzugter zwischen 0 bar und 0,2 bar liegt.

5. Verfahren nach einem der Ansprüche 1 bis 4, **dadurch gekennzeichnet, dass** der Behandlungsprozess auch einen Schritt (c) des Spülens des Filters umfasst, bei dem dieser einem siloxanfreien Methanstrom ausgesetzt wird.

6. Verfahren nach Anspruch 5, **dadurch gekennzeichnet, dass** der siloxanfreie Methanstrom Biogas ist, das zuvor durch das Verfahren nach einem der vorhergehenden Ansprüche behandelt wurde.

7. Verfahren nach einem der Ansprüche 5 und 6, **dadurch gekennzeichnet, dass** in Schritt (c) die Konzentration des Spülgases in dem am Filterausgang gesammelten Gasstrom kontinuierlich gemessen wird und die Filtertemperatur kontinuierlich gemessen wird, und dass Schritt (c) beendet wird, wenn :
- die gemessene Spülgaskonzentration unter einen vordefinierten Schwellenwert fällt und
- die Filtertemperatur unter einen vordefinierten Schwellenwert fällt.

## Claims

1. Method for treating a biogas containing siloxanes, **characterized in that** it comprises the steps consisting of:
a) filtering a flow of biogas containing siloxanes with a filter made from activated-carbon cloth so as to adsorb the siloxanes in said filter, then
b1) regenerating said filter by circulating an electric current in said filter subjected to a flushing gaseous flow, then
b2) optionally destroying said flushing gas thermally,
the regeneration phase (b1) being carried out at a temperature between 100°C and 300°C, more preferentially between 150°C and 300°C, and even more preferentially between 200°C and 300°C .

2. Method according to claim 1, **characterised in that** the concentration of siloxane is measured continuously in the gaseous flow connected at the discharge from the filter during step (a), and **in that** step (a) is stopped when the siloxane concentration measured exceeds a previously defined threshold, preferably approximately 5 mg/Nm³, more preferentially approximately 3 mg/Nm³, and even more preferentially approximately 1 mg/Nm³.

3. Method according to one or other of claims 1 and 2, **characterised in that** the flushing gas during step (b1) is air.

4. Method according to any one of claims 1 to 3, **characterised in that** the relative pressure of the flushing gas during step (b1) is between 0 bar and 1 bar, more preferentially between 0 bar and 0.5 bar, and even more preferentially between 0 bar and 0.2 bar.

5. Method according to any one of claims 1 to 4, **characterised in that** the treatment method also comprises a step (c) consisting of rinsing the filter and subjecting it to a flow of methane containing no siloxanes.

6. Method according to claim 5, **characterised in that** said flow of methane devoid of siloxane is biogas that was previously treated by the method according to any one of the preceding claims.

7. Method according to one or other of claims 5 and 6, **characterised in that**, during step (c), the concentration of flushing gas is measured continuously in the gaseous flow collected at the discharge from the filter and the temperature of the filter is measured continuously, and **in that** step (c) is stopped when:
- the concentration of flushing gas measured passes below a previously defined threshold, and
- the temperature of the filter passes below a previously defined threshold.
